# EUROPÄISCHE PATENTSCHRIFT

(11) **EP 3 357 691 B1**
(45) Veröffentlichungstag und Bekanntmachung des Hinweises auf die Patenterteilung: **14.07.2021**
(21) Anmeldenummer: 18153586.5
(22) Anmeldetag: 26.01.2018
(51) Int. Cl.: B32B 37/12, B32B 38/18

(54) **VORRICHTUNG ZUR HERSTELLUNG EINES TEPPICHS**
DEVICE FOR PRODUCING A CARPET
DISPOSITIF DE FABRICATION D'UN TAPIS

(30) Priorität: 02.02.2017 AT 500782017
(43) Veröffentlichungstag der Anmeldung: 08.08.2018
(73) Patentinhaber: ITD Vertriebsgesellschaft m.b.H., 2542 Kottingbrunn (AT)
(72) Erfinder: Dlouhy, Thomas, 2542 Kottingbrunn (AT)
(74) Vertreter: Patentanwaltskanzlei Matschnig & Forsthuber OG

(56) Entgegenhaltungen:
- WO-A1-03/008701
- US-A1- 2003 203 152

## Beschreibung

Die Erfindung betrifft eine Vorrichtung zur Herstellung eines temporär auf einem Gebäudeboden festhaftenden Teppichs.

Auf Messen oder ähnlichen Veranstaltungen ist es üblich, in den dazu vorgesehenen Räumlichkeiten Teppichbahnen zu verlegen, um den Besuchern dieser Veranstaltungen vorgegebene und sicher begehbare Wege auf den üblicherweise rutschigen Gebäudeboden anzubieten.

Hierbei ist es von besonderer Wichtigkeit, dass diese Teppichbahnen nicht einfach ausgerollt liegen gelassen werden, sondern durch etwaige Scher- und Zugspannungen oder ähnlich auftretende Belastungen, die unter anderem durch Besucher entstehen können, in ihrer Position fixiert bleiben, und nicht verrutscht oder aufwölbt.

Üblicherweise geschieht dies mit doppelseitigen Klebebändern, wobei zuerst eine Teppichbahn auf einem Gebäudeboden ausgerollt und in die gewünschte Position ausgerichtet wird (siehe z.B. US2003203152). Anschließend wird von Hand das doppelseitige Klebeband an beiden Längskanten des Teppichs in möglichst parallelen Bahnen zwischen Teppich und Gebäudeboden derart an dem Gebäudeboden verklebt, dass die Teppichkante im Wesentlichen bündig mit dem Klebeband abschließt.

Nachfolgend wird eine auf den Klebebändern angeordnete Abdeckfolie, üblicherweise aus Papier, abgezogen und der Teppich unter zusätzlichen Spannen über seine Länge mit den Klebebändern verklebt, ohne dass das doppelseitige Klebeband unter dem Teppich oder der Teppich bzw. die Teppichkante mehr als die Teppichdicke über das Klebeband hervorragt. Da die Abdeckfolie aus Papier in der Regel keine elastische Längenänderung oder zumindest eine Dehnbarkeit der Länge zulässt und der Teppich beim Spannen über seine Länge eine Längenänderung von bis zu ein Prozent erfährt, muss für jede angeordnete Klebebandlänge auf dem Gebäudeboden die auftretende Längenänderung des Teppichs mitberücksichtigt werden.

Weiters ist eine möglichst exakte Ausrichtung der Teppichkanten zu der jeweils zugehörigen Klebebandbahn wesentlich, da ein vorragendes Klebeband nicht nur optisch unansehnlich ist, sondern auch die nutzbare Klebefläche verkleinert wird, und wobei eine zu weit von der zugehörigen Klebebandbahn entfernt verklebte Teppichkante sich aufstellen und zu einer erhöhten Stolpergefahr führen kann.

Anschließend wird der Teppich im Bereich der auf der Unterseite des Teppichs verklebten Klebebandbahnen festgetreten.

Durch das Festtreten erfährt das Klebeband ebenfalls eine zusätzliche Längen- und Breitenänderung, welche bei der Bemaßung berücksichtigt werden muss. Ferner unterliegt der Prozess des Aus- bzw. Festtretens einer gewissen Ungenauigkeit, da niemals auf allen wesentlichen Stellen ein gleichmäßiger Druck ausgeübt wird.

Deshalb ist es eine Aufgabe der Erfindung eine Vorrichtung bereitzustellen, um oben erwähnte Nachteile und andere Einschränkungen des Standes der Technik zu vermeiden.

Ebenso ist es Aufgabe der Erfindung die aufzubringenden Kosten für das zu verwendende doppelseitige Klebeband bei der Herstellung eines temporär auf dem Gebäudeboden festhaftenden Teppichs zu senken.

Diese Aufgabe wird mit einer eingangs genannten Vorrichtung dadurch gelöst, dass erfindungsgemäß auf einem Tragerahmen der Vorrichtung angeordnet sind:
- ein Zuführabschnitt mit Halterungselementen zur Lagerung einer Teppichrolle,
- ein Bearbeitungsabschnitt mit zumindest zwei Klebebandrollen, wobei Klebeband von einer Klebebandrolle in ein der jeweiligen Klebebandrolle zugeordneten Klebeband-Zuführelement zugeführt wird,
   je zumindest eine im Bereich einer - bezogen auf die Teppichzuführrichtung - vorderen und hinteren Endkante einer Auflageplatte angeordnete Teppich-Führungsrolle, welche je eine in der Höhe verstellbare und über der jeweiligen Teppich-Führungsrolle angeordnete Anpressrolle zugeordnet ist,
- ein Aufrollabschnitt, mit zumindest zwei Kompaktierungsrollen zum Aufrollen des von dem Bearbeitungsabschnitt einlaufenden Teppichs,
- zumindest ein Motor für den Antrieb von den Teppich bewegenden Rollen sowie weiteren beweglichen Elementen der Vorrichtung.

Durch das Anpressverfahren mittels der Anpressrollen wird die absolute Klebefläche des Klebebandes erhöht, da durch das gleichmäßige Anpressen das dehnbare Klebeband in die im Allgemeinen raue Unterseite des Teppichs gedrückt wird, und damit das dehnbare Klebeband in die raue Oberfläche hineinkriechen kann. Dadurch kann ein schmäleres und dadurch billigeres Klebeband verwendet werden.

Erfindungsgemäss sind die Klebeband-Zuführelemente derart angeordnet, dass die Klebebänder in Form von durchgehenden Streifen im Wesentlichen parallel an den Längskanten auf die Unterseite des Teppichs geklebt werden.

Es ist zweckmäßig, wenn zumindest zwei Sensormittel zum Detektieren des Abstandes zwischen Teppichkante und zugeführtem Klebeband vorgesehen sind und den Sensormitteln eine Verschiebeeinheit zugeordnet ist, die dazu eingerichtet ist, die jeweiligen Klebeband-Zuführelemente und Sensormittel zu verschieben.

Da Teppiche im Allgemeinen straff aufgerollt werden, vorzugsweise auf einer Stange, und in diesem Zustand transportiert und gelagert werden, weisen Teppiche bei einem späteren Ausrollen eine nicht gleichmäßige Teppichbreite auf. Grund dafür ist die Elastizität bzw. die Dehnbarkeit der einzelnen Teppiche. Die im aufgerollten Zustand weiter innen gelegenen Teppichschichten werden von den äußeren Schichten aufgrund des straffen Aufrollens zusammengedrückt und werden dadurch in die Breite gedehnt, was dazu führt, dass beim Auftragen des Klebebandes durch die Klebeband-Zuführmittel der Abstand zwischen Teppichkante und Klebeband ungleichmäßig ausfallen würde.

Die eingesetzten Sensormittel mit den zugeordneten Verschiebeeinheiten beheben dieses Problem, indem jeweils zumindest ein Sensormittel permanent den Abstand zwischen einer Teppichkante und dem Klebeband misst bzw. detektiert und durch ein Verschieben der Klebeband-Zuführeinheiten mittels Verschiebeeinheiten etwaige Unregelmäßigkeiten ausgleicht, wobei die Klebeband-Zuführelemente vorzugsweise in Ausnehmungen an der Auflageplatte angeordnet sind.

Vorteilhafterweise sind die Sensoreinrichtungen in Richtung Teppichzuführrichtung jeweils vor den Klebeband-Zuführelementen angeordnet.

Weiter ist es vorteilhaft, wenn die Auflageplatte zumindest zwei getrennte Module aufweist, wobei zwei Module je zumindest ein Klebeband-Zuführelement aufweisen, wobei eines dieser Klebeband-Zuführelement aufweisenden Module an dem Tragerahmen fest fixiert angeordnet ist, und das zumindest eine weitere Modul auf dem Tragerahmen in Bezug auf das fixierte Modul verschiebbar gelagert und in einer gewünschten Position vorübergehend fixierbar ist.

Dadurch können unterschiedliche Teppichbreiten bearbeitet werden, wobei eine analoge Verschiebung des zumindest einen weiteren Moduls möglich ist. Durch dieses Konzept ist die zu bearbeitende Teppichbreite limitiert durch die Größe der Module und dem Tragerahmen, wobei Zwischenmodule der Auflageplatte vorteilhaft sind, wenn der gewählte Abstand zwischen den zumindest zwei Modulen so groß ist, dass der Teppich dazwischen durchhängt oder sogar durch sein Eigengewicht durchrutscht bzw. durchfällt.

Es ist zweckmäßig, wenn der Bearbeitungsabschnitt weiters zumindest einen Abstandshalter aufweist, welcher in der Höhe verstellbar ist und welcher den Teppich in gleichbleibenden Abstand zum jeweiligen Sensormittel hält.

Die Abstandshalter gewährleisten, dass der Teppich im Wesentlichen auf den Sensormitteln und/oder auf den oberen Bereich der Klebeband-Zuführelementen aufliegt, damit diese optimal funktionieren, da es trotz Anpressrollen und Teppich-Führungsrollen zu einer geringen Wellenbildung des Teppichs kommen kann.

Es ist vorteilhaft, wenn der Abstandshalter mit einer der Anpressrollen mechanisch gekoppelt ist und durch ein Absenken dieser Anpressrolle abgesenkt wird.

Hierbei kann der Abstandshalter beispielsweise mit einem Scharnier am Tragerahmen befestigt sein, wobei ein Abschnitt des Abstandhalters oberhalb einer Anpressrolle angeordnet ist und dadurch mittels der Scharniere höhenverstellbar mit dieser Anpressrolle gekoppelt ist.

Bei einer zweckmäßigen Ausgestaltung kann vorgesehen sein, dass zumindest zwei Schneidmittel in jeweils einer Ausnehmung in der Auflageplatte angeordnet sind, wobei die von den Schneidmitteln durchgeführten Schnittlinien an dem über die Schneidmittel geführten Teppich, im Wesentlichen parallel zur Teppichzuführrichtung verlaufen, um eine zugeschnittene Teppichbahn mit gleichbleibender Breite zu erhalten.

Hierbei wird ebenfalls das oben beschriebene Problem der unregelmäßigen Teppichbreite gelöst. Statt der Verwendung von Sensormitteln wird eine gleichbleibende Breite des Teppichs erzeugt, indem Ränder in Längsrichtung des Teppichs bzw. in Teppichzuführrichtung mittels der Schneidmittel abgeschnitten werden.

Eine praxisgerechte Weiterbildung der Erfindung sieht vor, dass mehr als zwei Schneidmittel in jeweils einer Ausnehmung in der Auflageplatte angeordnet sind, wobei die von den Schneidmitteln durchgeführten Schnittlinien an dem über die Schneidmittel geführten Teppich, im Wesentlichen parallel zur Teppichzuführrichtung verlaufen, wobei durch die Schneidmittel mehrere Teppichbahnen mit gleichbleibender Breite erzeugt werden.

Ebenso kann vorgesehen sein, dass die Klebeband-Zuführelemente derart angeordnet sind, dass die Klebebänder in Form von durchgehenden Streifen im Wesentlichen parallel an den Längskanten auf die Unterseite der durch die Schneidmittel erzeugten Teppichbahnen geklebt werden.

Weiters ist es zweckmäßig, wenn zumindest eine der Teppich-Führungsrollen, angetrieben durch den zumindest einen Motor, eine Teppichbahn von dem Zuführabschnitt über den Bearbeitungsabschnitt bis zum Aufrollabschnitt führt.

Bei einer vorteilhaften Variante kann der Bearbeitungsabschnitt zusätzlich ein Längenmessgerät mit einem Längenmessrad umfassen, welches in einer Ausnehmung in der Auflageplatte angeordnet ist, und das Längenmessgerät zusätzlich ein Anpressrad umfasst, welches den über das Längenmessrad laufenden Teppich in ständigen Kontakt mit dem Längenmessrad hält.

Bei diesem Längenmessgerät wird die gewünschte zu bearbeitende Länge des Teppichs vorgegeben bzw. eingestellt. Mit Hilfe des Längenmessrades wird die Länge des durch die Vorrichtung geführten Teppichs gemessen, wobei die Teppichzuführung bei Erreichen der vorgegebenen Länge automatisch gestoppt wird.

Es ist von Vorteil, wenn das Anpressrad mit einer der Anpressrollen mechanisch gekoppelt ist und durch ein Absenken dieser Anpressrolle abgesenkt wird.

Ebenso kann mit Vorteil vorgesehen sein, dass die Teppich-Führungsrollen und/oder die zugeordneten Anpressrollen jeweils in jenem Bereich einen größeren Umfangsabschnitt aufweisen, bei welchem das Klebeband auf den Teppich zugeführt und geklebt wird.

Bei einer zweckmäßigen Variante kann der größere Umfangsabschnitt der Teppich-Führungsrollen und/oder Anpressrollen durch an diesen Rollen bewegliche Elemente erzeugt werden.

Dies hat unter anderem den Vorteil, dass bei einer Abstandsänderung der Module der Auflageplatte diese Elemente ebenso neu angeordnet werden können.

Es kann vorgesehen sein, dass nach der in Teppichzuführrichtung letzten Teppich-Führungsrolle eine Schneidführung für ein Schneidewerkzeug vorgesehen ist, um den Teppich in seiner Länge zu beschneiden.

Es ist vorteilhaft, wenn den zumindest zwei Klebebandrollen jeweils eine Umlenkrolle zugeordnet ist, wobei Klebeband von einer Klebebandrolle über die Umlenkrolle in das der jeweiligen Klebebandrolle zugehörige Klebeband-Zuführelement zugeführt wird.

Vorteilhafterweise ist der zumindest eine Motor als Gleichstrommotor ausgebildet.

Damit kann bei Bedarf die Vorrichtung unabhängig vom Stromnetz mit geeignetem Akkumulator betrieben werden, vorzugsweise in einer 24 Volt-Variante des Motors.

Nachfolgend wird die Erfindung anhand von Zeichnungen näher erläutert. Hierbei zeigt
Fig. 1 eine Schrägansicht eines Beispiels der Erfindung,
Fig. 2 eine Seitenansicht eines Klebeband-Zuführelements mit einem Sensormittel,
Fig. 3 eine Ansicht von unten eines Moduls einer Auflageplatte mit Klebeband-Zuführelement und dargestellten Verschiebeeinheit,
Fig. 4, 5 und 6 eine Draufsicht des in Fig. 2 gezeigten Klebeband-Zuführelements mit jeweils einer unterschiedlichen Position einer eingezeichneten Teppichkante,

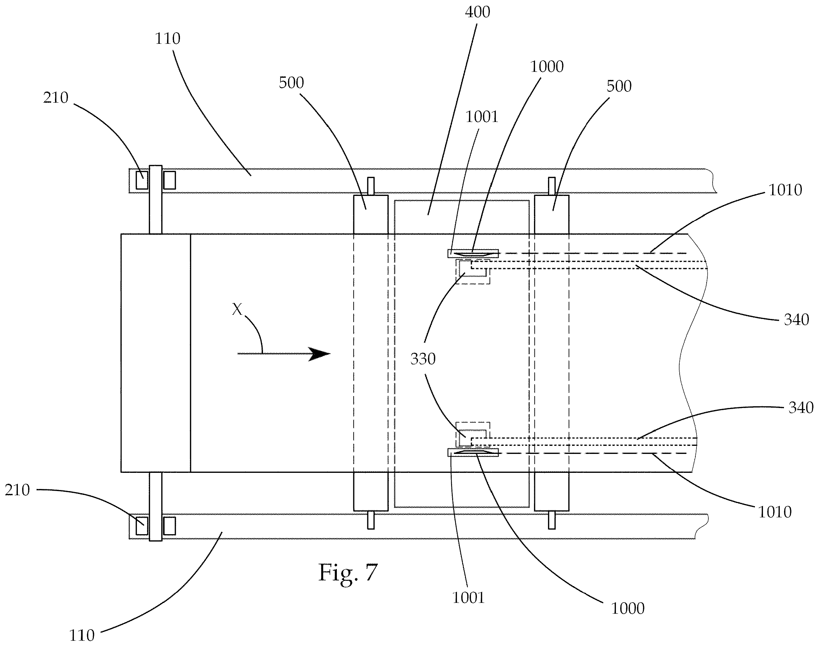

Fig. 7 eine Draufsicht einer alternativen Ausführungsform,
Fig. 8 eine Ausführung eines Teppichs ohne einer Abdeckfolie auf den doppelseitigen Klebebändern,
Fig. 9 die Ausführung von Fig. 8 mit angeordneten Abdeckfolien,
Fig. 10 eine Detailansicht von Schnitt III-III aus Fig. 9,
Fig. 11 der Teppich in Form einer kompakten Rolle aufgerollt,
Fig. 12 eine Schrägansicht des in die Länge gespannten Teppichs und Fixierung mit Hilfe eines Verlegebandes, und
Fig. 13 eine Detailansicht von Schnitt VI-VI aus Fig. 12.

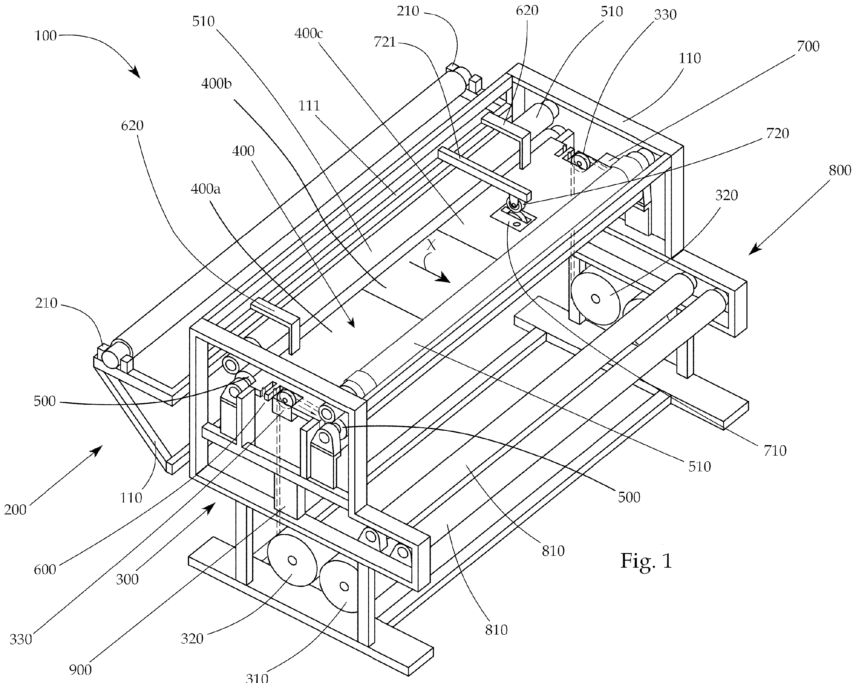

Das in **Fig. 1** gezeigte Ausführungsbeispiel lässt sich in einen Zuführabschnitt **200**, einen Bearbeitungsabschnitt **300** und einen Aufrollabschnitt **800** unterteilen, welche allesamt auf einem Tragerahmen **110** angeordnet sind, wobei die Ausführungsform in **Fig. 1** mit einem an dem Tragerahmen **110** angeordneten Motor **900** betrieben wird, welcher als Gleichstrommotor in einer 24 Volt-Variante ausgebildet ist.

Der Zuführabschnitt **200** umfasst Halterungselemente **210**, welche zur Aufhängung einer Teppichrolle, beispielsweise an einer Stange aufgerollten Teppichrolle, ausgebildet sind, beispielsweise Stangen, auf der Teppichbahnen aufgerollt sind, die üblicherweise auf Gebäudeboden, beispielsweise Messehallen, verlegt werden, bevor diese ausgerollt oder unterschiedlichen Bearbeitungsschritten unterzogen werden, um unter anderem Transportvorgänge zu erleichtern.

Ebenso erleichtern die Halterungselemente **210** ein späteres Einspannen des Teppichs in die beispielhafte Vorrichtung, da dieser, wenn er durch die Vorrichtung von der Stange gerollt wird, die Stange in der Position, welche die Halterungselemente **210** vorgeben, verbleibt.

Der Bearbeitungsabschnitt **300** umfasst in dem in **Fig. 1** gezeigten Beispiel zwei Klebebandrollen **310**, wobei Klebeband, vorzugsweise doppelseitiges Klebeband, von einer Klebebandrolle **310** in ein der jeweiligen Klebebandrolle **310** zugeordneten Klebeband-Zuführelement **330** zugeführt wird.

In direkter Umgebung zu je einer Klebebandrolle **310** ist eine der jeweiligen Klebebandrolle **310** zugeordnete Umlenkrolle **320** angeordnet, welche dazu geeignet ist, dass das Klebeband von der jeweiligen Klebebandrolle **310** ordnungsgemäß in das Klebeband-Zuführelement **330** zu führen.

Die Klebeband-Zuführelemente **330** sind auf den parallel zur Teppichzuführrichtung **X** gelegenen Außenkanten einer Auflageplatte **400**, vorzugsweise in Ausnehmungen der Auflageplatte **400**, derart angeordnet, dass die Klebebänder, vorzugsweise doppelseitiges Klebeband, in Form von durchgehenden Streifen im Wesentlichen parallel an den Längskanten auf die Unterseite des Teppichs geklebt werden.

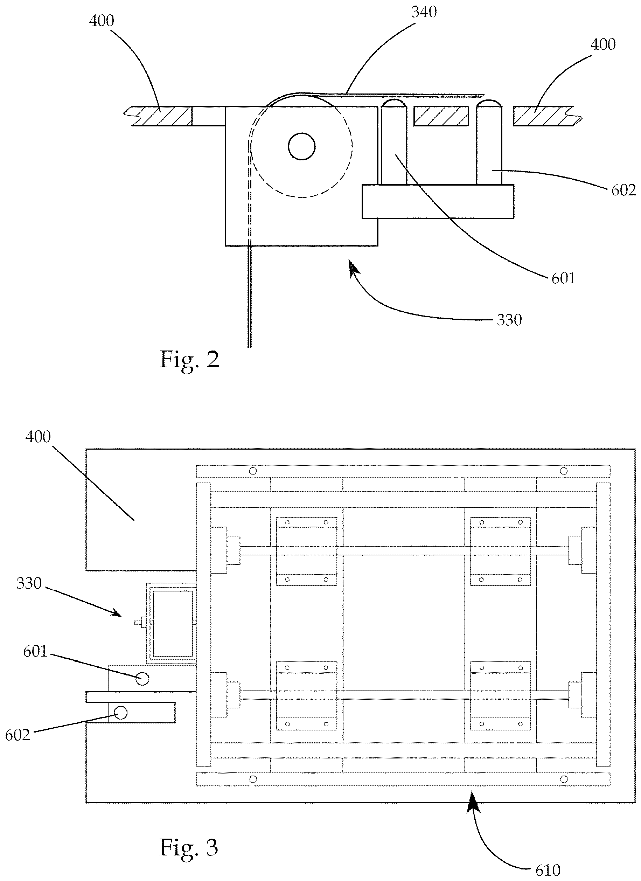

Da wie zuvor in der Einleitungsbeschreibung erwähnt, die Teppichbreite eines zuvor aufgerollten Teppichs variiert, ist jedem Klebeband-Zuführelement **330** des in **Fig. 1** gezeigten Beispiels ein Sensormittel **600** zum Detektieren des Abstandes zwischen Teppichkante und zugeführtem Klebeband zugeordnet, wobei die Sensormittel **600** je mit einer unter der Auflageplatte **400** angeordneten Verschiebeeinheit **610** verbunden ist, welches in **Fig. 3** schematisch gezeigt ist, sodass bei einer variierenden Breite des über die Auflageplatte **400** laufenden Teppichs die Klebeband-Zuführeinheit **330** mitsamt dem zugeordneten Sensormittel **600** derart verschoben wird, dass ein zuvor eingestellter Abstand zwischen Teppichkante und Klebeband-Zuführelement **330** beibehalten wird.

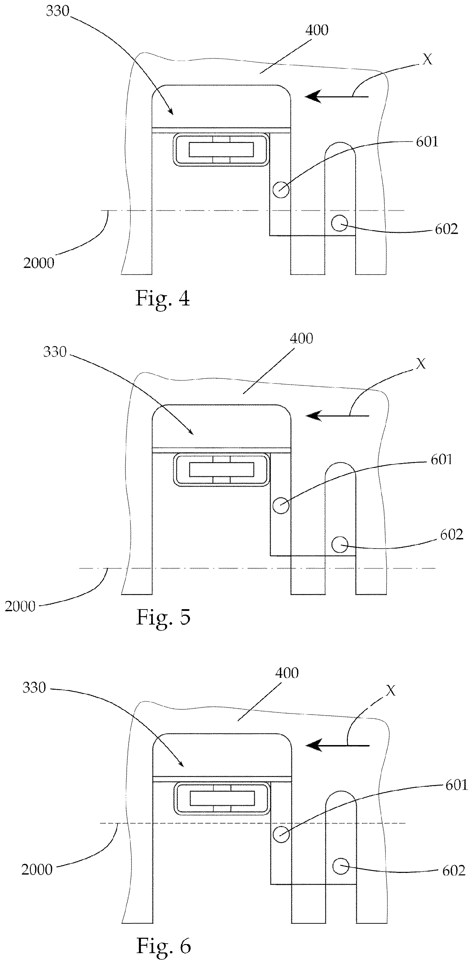

Hierbei zeigt **Fig. 2** eine Seitenansicht und **Fig. 4, 5** und **6** eine Detailansicht von oben eines Klebeband-Zuführelements **330** mit einem Sensormittel **600**, welches in dieser Ausführungsform einen ersten und zweiten optischen, lichtsensitiven Sensor **601**, **602** umfasst, wobei der einstellbare und anschließend fixierbare Abstand der Sensoren **601**, **602** bzw. der Sensorenanordnung zu dem jeweiligen Klebeband-Zuführelement **330** bestimmt, in welchem Abstand das Klebeband zur darüber laufenden Teppichkante zugeführt werden soll.

Die Sensoren **601**, **602** sind derart angeordnet, dass diese in Teppichzuführrichtung **X** nicht fluchten, sondern versetzt angeordnet sind, wobei keine Verschiebung des Klebeband-Zuführelements **330** durchgeführt wird, wenn der erste Sensor **601** bündig von einem darüber laufenden Teppich bzw. der Teppichkante **2000** verdeckt wird, und der zweite Sensor **602** an der Teppichkante **2000** anschließt und nicht verdeckt wird, wie in **Fig. 4** dargestellt.

Sollte die Teppichbreite dermaßen variieren, dass auch der zweite Sensor **602** von dem Teppich verdeckt wird, wie in **Fig. 5** dargestellt, so wird das Klebeband-Zuführelement **330** gemeinsam mit den Sensoren **601**, **602** bzw. der Sensoranordnung orthogonal zur Teppichzuführrichtung **X** dermaßen bewegt, sodass, wie bereits oben erwähnt, der erste Sensor **601** von dem Teppich bzw. der Teppichkante **2000** vollständig verdeckt und der zweite Sensor **602** nicht verdeckt wird.

Sollte die Teppichbreite dermaßen variieren, dass auch der erste Sensor **601** von dem Teppich nicht mehr verdeckt wird, wie in **Fig. 6** gezeigt, so wird das Klebeband-Zuführelement **330** gemeinsam mit den Sensoren **601**, **602** bzw. der Sensoranordnung orthogonal zur Teppichzuführrichtung **X** derart bewegt, sodass, wie bereits oben erwähnt, der erste Sensor **601** von dem Teppich bzw. der Teppichkante **2000** vollständig verdeckt und der zweite Sensor **602** nicht verdeckt wird.

Wie in **Fig. 1**, **4**, **5** und **6** gezeigt, sind die Sensormittel **600** in Richtung Teppichzuführrichtung **X** jeweils vor den Klebeband-Zuführelementen **330** angeordnet, da sinnvoll ist eine variierende Teppichbreite auszugleichen, bevor das Klebeband, vorzugsweise doppelseitiges Klebeband, auf den Teppich geklebt wird.

Der Bearbeitungsabschnitt **300** umfasst weiters eine an jeder im Wesentlichen normal bzw. orthogonal zur Teppichzuführrichtung **X** liegenden Außenkante der Auflageplatte **400** angeordnete Teppich-Führungsrolle **500** mit einer in der Höhe verstellbaren und über der jeweiligen Teppich-Führungsrolle **500** angeordnete Anpressrolle **510**, wobei in dem in **Fig. 1** gezeigten Beispiel nur eine Anpressrolle **510** aufgrund der Übersichtlichkeit eingezeichnet wurde.

Zumindest eine der Teppich-Führungsrollen **500**, vorzugsweise beide Teppich-Führungsrollen **500**, wird durch den Motor **900** angetrieben, um den herzustellenden Teppich von dem Zuführabschnitt **200** über den Bearbeitungsabschnitt **300** bis zum Aufrollabschnitt **800** zu führen.

Mittels Elektrohubzylinder werden die Anpressrollen **510** auf die jeweiligen Teppich-Führungsrollen **500** abgesenkt, damit durch diesen Anpressvorgang genügend Reibung auf dem dazwischen liegenden Teppich entsteht, sodass mittels Motor **900** und dieser erzeugten Reibung eine solche Zugkraft erzielt wird, dass der Teppich in seinem aufgerollten Zustand auf der zuvor erwähnten Stange optimal durch die Vorrichtung **100** geführt bzw. gezogen werden kann.

Überdies kann durch die auf die Teppich-Führungsrollen **500** anpressenden Anpressrollen **510** eine gegebenenfalls auftretende Wellenbildung des Teppichs minimiert bzw. beseitigt werden, sowie der Teppich möglichst gespannt über die Auflageplatte **400** geführt werden.

Weiters können die Teppich-Führungsrollen **500** sowie die Anpressrollen **510** jeweils in jenem Bereich einen größeren Umfangsabschnitt **520** aufweisen, bei welchem das Klebeband, vorzugsweise doppelseitiges Klebeband, auf den Teppich zugeführt und geklebt wird.

Dadurch wird die absolute Klebefläche des Klebebandes, vorzugsweise doppelseitiges Klebeband, erhöht, da durch das gleichmäßige, punktuelle Anpressen das dehnbare Klebeband in die im Allgemeinen raue Unterseite des Teppichs gedrückt wird, und dadurch die Klebefestigkeit erhöht wird.

Ferner umfasst der Bearbeitungsabschnitt **300** zumindest einen Abstandshalter **620**, vorzugsweise zwei oder mehr Abstandshalter **620**, welche mit einer der Anpressrollen **510** mechanisch gekoppelt sind und durch ein Absenken dieser Anpressrolle **510** abgesenkt werden, wobei zwei Abstandshalter **620** im Bereich der Sensormittel **600** und der Klebeband-Zuführelemente **330** angeordnet sind, wie in **Fig. 1** dargestellt, um den Teppich in gleichbleibenden Höhenabstand zu den jeweiligen Sensormitteln **600** zu halten, damit gewährleistet wird, dass die optischen, lichtsensitiven Sensoren **601**, **602** optimal funktionieren.

Hierfür ist zumindest eine parallel zu einer Anpressrolle **510** verlaufende Verstrebung **111** des Tragerahmens **110** im Bereich einer zugeordneten Anpressrolle **510** auf der der Auflageplatte **400** abgewandten Seite bzw. Bereich vorgesehen, wobei die Abstandshalter **620** beispielsweise mittels Scharnieren auf dieser Verstrebung **111** befestigt sind, sodass ein Abschnitt des Abstandhalters **620** auf der der Verstrebung **111** zugeordneten Anpressrolle aufliegt und bei einer Höhenverstellung dieser Anpressrolle **510** die Höhe des Abschnitts des Abstandhalters **620**, welcher eingerichtet ist, um einen gleichbleibenden Höhenabstand zu den jeweiligen Sensormitteln **600** zu gewährleisten, gleichsam verstellt wird.

Wie oben beschrieben, können mit Hilfe der Sensormittel **600** und der beweglichen Klebeband-Zuführelemente **330** variierende Teppichbreiten ausgeglichen werden, um so einen gleichbleibenden Abstand zwischen Teppichkante und aufgeklebtem Klebeband zu gewährleisten. Damit können Breitenunterschiede von einigen Zentimetern, vorzugsweise 4 cm, ausgeglichen werden, wobei dies über die Tiefe der Ausnehmungen der Auflageplatte **400**, in denen die Klebeband-Zuführelemente **330** jeweils angeordnet sind, und über die den jeweiligen Klebeband-Zuführelementen **330** zugeordneten Verschiebeeinheiten **610** modifizier- bzw. einstellbar ist.

Um nun unterschiedliche Teppichbreiten bearbeiten zu können, kann die Auflageplatte **400** in separate Module **400a, 400b, 400c** unterteilt werden. In dem in **Fig. 1** gezeigten Beispiel ist die Auflageplatte **400** in drei Module **400a, 400b, 400c** separiert, wobei die außen gelegenen Module **400a, 400c** je zumindest ein Klebeband-Zuführelement **330** mit einem Sensormittel **600** umfassen.

Eines der außen gelegenen Module **400c** ist fest an dem Tragerahmen **110** fixiert angeordnet, wobei die übrigen Module **400a, 400b** auf dem Tragerahmen **110** in Bezug auf das fixierte Modul **400c** verschiebbar gelagert und in einer gewünschten Position fixierbar sind, und auch wieder gelöst werden können.

Hierbei kann beispielsweise das in **Fig. 1** gezeigte mittlere Zwischenmodul **400b** herausgenommen werden und das verschiebbar gelagerte Modul **400a** bis zu dem an dem Tragerahmen **110** fixierten Modul **400c** geschoben werden. In einer anderen Ausführungsform ist auch ein in der Breite vergrößerter Tragerahmen **110** denkbar, sowie weitere Zwischenmodule, die zwischen den außen gelegenen Modulen **400a, 400c** angeordnet werden können, wenn der gewählte Abstand zwischen den zwei außen gelegenen Modulen **400a, 400c** so groß ist, dass der Teppich dazwischen durchhängt oder sogar durch sein Eigengewicht durchrutscht bzw. durchfällt.

Bei einer Positionsveränderung des außen gelegenen, verschiebbar gelagerten Moduls **400a**, kann auch vorgesehen sein, dass ein dem auf diesen Modul **400a** angeordneten Sensormittel **600** zugeordneter Abstandshalter **620** ebenfalls verschiebbar ausgebildet ist. Es können auch mehrere Abstandshalter **620** fest auf der oben erwähnten Verstrebung angeordnet sein, wobei durch den Abstand der Abstandshalter **620** mögliche zu bearbeitende Teppichbreiten vorgegeben wären.

Ebenso kann bei einer Positionsveränderung des außen gelegenen, verschiebbar gelagerten Moduls **400a** vorgesehen sein, dass der größere Umfangsabschnitt **520** der Teppich-Führungsrollen **500** und/oder Anpressrollen **510** durch an diesen Rollen bewegliche Elemente erzeugt werden, da bei einer Abstandsänderung der Module **400a, 400b, 400c** der Auflageplatte **400** diese Elemente ebenso neu angeordnet werden können.

Um eine gewünschte Teppichlänge mit darauf angeordneten Klebebändern vorzugeben, umfasst der Bearbeitungsabschnitt **300** weiters ein Längenmessgerät **700** mit einem Längenmessrad **710**, welches in einer Ausnehmung in der Auflageplatte **400**, bei einer Ausführungsform mit separaten Modulen **400a, 400b, 400c** vorzugsweise auf dem außen, an dem Tragerahmen **110** fixierten Modul **400c**, angeordnet ist, wobei dem Längenmessrad **710** ein Anpressrad **720** zugeordnet ist, welches den über das Längenmessrad **710** laufenden Teppich in ständigen Kontakt mit dem Längenmessrad **710** hält.

Eine vordefinierte Länge des Teppichs kann über das Längenmessgerät **700** eingestellt werden, wobei das Längenmessrad **710** die Länge des darüber laufenden Teppichs misst. Hierfür sollte der Teppich bzw. die raue Unterseite des Teppichs in ständigem Kontakt mit dem Längenmessrad **710** sein, um eine optimale Funktionsweise sicherzustellen. Um dies zu gewährleisten, ist das Anpressrad **720** über dem Längenmessrad **710** angeordnet und drückt mit seinem Eigengewicht den Teppich auf das Längenmessrad **710**.

Wie bereits für die Abstandshalter **620** beschrieben kann auch das Anpressrad **720** mit einer der Anpressrollen **510** mechanisch gekoppelt sein und durch ein Absenken dieser Absenkrolle **510** ebenfalls abgesenkt wird.

Hierfür ist zumindest eine parallel zu einer Anpressrolle **510** verlaufende Verstrebung **111** des Tragerahmens **110**, vorzugsweise dieselbe, auf welcher die Abstandshalter **620** angeordnet sind, im Bereich einer zugeordneten Anpressrolle **510** auf der der Auflageplatte **400** abgewandten Seite bzw. Bereich vorgesehen, wobei ein Element bzw. Bauteil **721**, auf dem das Anpressrad **720** angeordnet ist, beispielsweise mittels Scharnieren auf dieser Verstrebung **111** befestigt ist, sodass dieses Element bzw. Bauteil **721** des Anpressrads **720** auf der der Verstrebung **111** zugeordneten Anpressrolle **510** aufliegt und bei einer Höhenverstellung dieser Anpressrolle **510** die Höhe des Anpressrads **720** gleichsam verstellt wird.

Nachdem die an dem Längenmessgerät **710** eingestellte Länge erreicht ist, wird die Vorrichtung **100** gestoppt, wobei eine nach der in Teppichzuführrichtung **X** letzten Teppich-Führungsrolle **500** angeordnete Schneidführung **120** vorgesehen ist, um den Teppich in seiner Länge zu beschneiden. Hierfür können unterschiedlichste Schneidwerkzeuge verwendet werden.

Der in Teppichzuführrichtung **X** zuletzt angeordnete Aufrollabschnitt **8** umfasst in dem in **Fig. 1** gezeigten Beispiel zwei Kompaktierungsrollen **810**, wobei der von dem Bearbeitungsabschnitt **300** kommende Teppich durch diese Kompaktierungsrollen **810** wieder aufgerollt wird.

Hierbei ist eine der Kompaktierungsrollen **810** mit einer gummierten Oberfläche ausgestattet, die auf der Teppichoberfläche genügend Reibung erzeugt, sodass der Teppich durch diese Kompaktierungsrolle **810** in einen aufgerollten Zustand geführt wird, wobei der Teppich nicht um diese Kompaktierungsrolle **810**, sondern im Wesentlichen auf bzw. zwischen den Kompaktierungsrollen **810** liegend, aufgerollt wird.

Im Allgemeinen hat der vom Bearbeitungsabschnitt **300** kommende Teppich durch den vor der Bearbeitung aufgerollten Lagerzustand, eine Tendenz in genau diesen aufgerollten Zustand zurückzukehren, und somit eine bevorzugte Aufrollrichtung vorgibt.

Eine weitere Ausführungsform ist in **Fig. 2** schematisch dargestellt. Hierbei wird das Problem der variierenden bzw. unregelmäßigen Teppichbreite dadurch gelöst, dass statt den Sensormitteln **600** Schneidmittel **1000** angeordnet sind, wobei zwei Schneidmittel **1000** in jeweils einer Ausnehmung in der Auflageplatte **400** angeordnet sind, wobei die von den Schneidmitteln **1000** durchgeführten Schnittlinien an dem über die Schneidmittel **1000** geführten Teppich, im Wesentlichen parallel zur Teppichzuführrichtung **X** verlaufen, und wobei durch die Schneidmittel **1000** eine Teppichbahn mit gleichbleibender Breite erzeugt wird.

Statt der Verwendung von Sensormitteln **600** wird also eine gleichbleibende Breite des Teppichs erzeugt, indem Ränder in Längsrichtung des Teppichs bzw. in Teppichzuführrichtung **X** mittels der Schneidmittel **1000** abgeschnitten und entfernt werden.

Mit der Verwendung von mehr als zwei Schneidmitteln **1000** können auch mehrere Teppichbahnen mit gleichbleibender Breite gleichzeitig erzeugt und bearbeitet werden. Hierzu müssten analog mehr Klebeband-Zuführelemente **330**, welche Klebebänder, vorzugsweise doppelseitige Klebebänder, in Form von durchgehenden Streifen im Wesentlichen parallel an den Längskanten der durch die Schneidmittel erzeugten Teppichbahnen zuführen, sowie Klebebandrollen **310** und Umlenkrollen **320** angeordnet werden.

Nachfolgend wird ein beispielhaftes Verfahren zur Herstellung eines temporär festhaftenden Teppichs auf der erfindungsgemäßen Vorrichtung beschrieben.

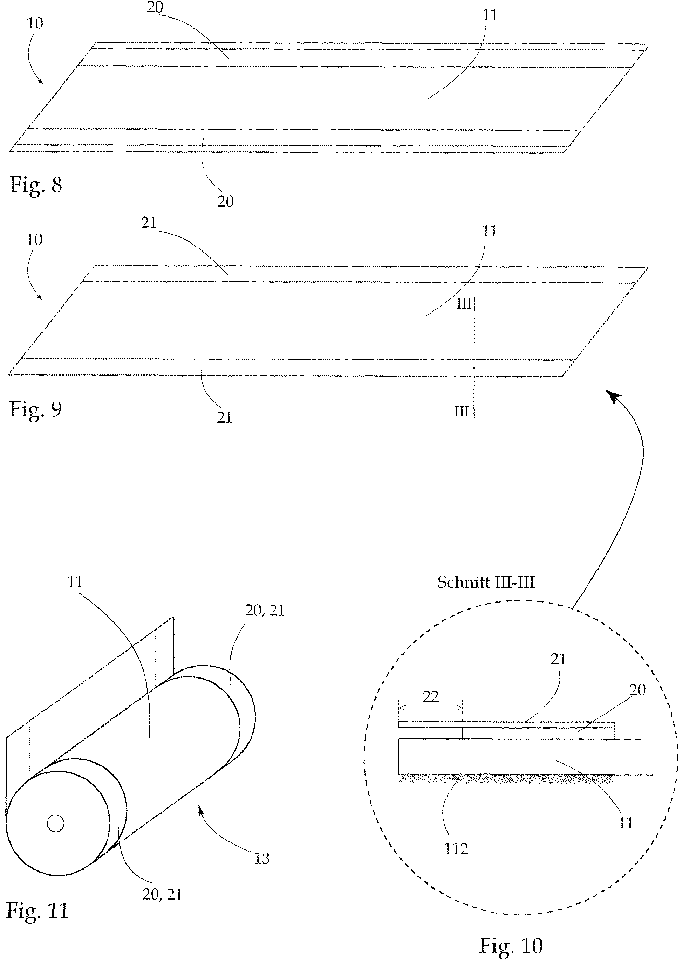

In **Fig. 8** und **Fig. 9** ist ein Ausführungsbeispiel des hergestellten Teppichs **10** mit der begehbaren Oberseite **12** nach unten und mit der nicht begehbaren Unterseite **11** nach oben abgebildet, wobei doppelseitige Klebebänder **20** in durchgehender Streifenform parallel an beiden Längskanten angeordnet sind. Zur Herstellung eines erfindungsgemäßen Teppichs wird ein für Messe- bzw. Veranstaltungsgebäude üblicher Teppich, beispielsweise Nadelfilzteppich, verwendet.

Bei der in **Fig. 8** dargestellten Form sind die Klebebänder **20** mit einem Abstand zu den Längskanten angeordnet, wobei ein Anordnen der doppelseitigen Klebebänder **20** bündig mit den Längskanten ebenso möglich ist.

Im Unterschied zu **Fig. 8** sind in **Fig. 9** auf den Klebebändern **20** jeweils elastische, abziehbare Abdeckfolien **21** angeordnet, beispielsweise aus Polypropylen, welche jeweils eine größere Breite als die doppelseitigen Klebebänder **2** aufweisen, wobei diese überstehende Breite **22** der Abdeckfolie **21** in Richtung der jeweiligen Längskante des Teppichs **10** vorsteht.

**Fig. 10** zeigt eine Detailansicht eines Schnittes III-III aus **Fig. 9**, wobei die später begehbare Oberseite **12** des Teppichs nach unten und die nicht begehbare Unterseite nach oben gerichtet ist. Die Kante der überstehenden Breite **22** der Abdeckfolie **21** schließt mit der jeweiligen Längskante des Teppichs **10** ab, wobei in einem anderen Beispiel ein Überstehen möglich ist.

Die doppelseitigen Klebebänder **20** weisen auf einer Seite eine von der anderen Seite unterschiedliche Klebekraft auf, wobei die stärker klebende Seite auf der Unterseite 11 des Teppichs **10** geklebt wird. Unter einer stärker bzw. schwächer klebenden Seite wird im Zusammenhang mit der vorliegenden Erfindung verstanden, dass durch ein späteres Ablösen des erfindungsgemäßen Teppichs **10** von einem Gebäudeboden die Klebewirkung des doppelseitigen Klebebandes **20** auf die Unterseite **11** des Teppichs **10** beibehalten wird.

Nach dem Anordnen der doppelseitigen Klebebänder **20** wird der Teppich **11** in eine vorgegebene Länge geschnitten und in eine kompakte Rolle **13** zusammengerollt, wie in **Fig. 11** dargestellt, um ein nachfolgendes Transportieren und/oder Schlichten des Teppichs **10** zu ermöglichen, wobei der Teppich **10** mit der Unterseite **11** des Teppichs **10** nach außen hin aufgerollt wird. Für das Zusammenrollen des Teppichs **10** ist die Elastizität der Abdeckfolie **20** von Bedeutung, da durch das Zusammenrollen eine Längenänderung der angeordneten Klebebänder 20 verursacht wird. In einer Ausführungsform wird aus diesem Grund Polypropylen als Werkstoff für die Abdeckfolie verwendet, wobei andere Materialien, die ähnliche elastische Eigenschaften besitzen, möglich sind.

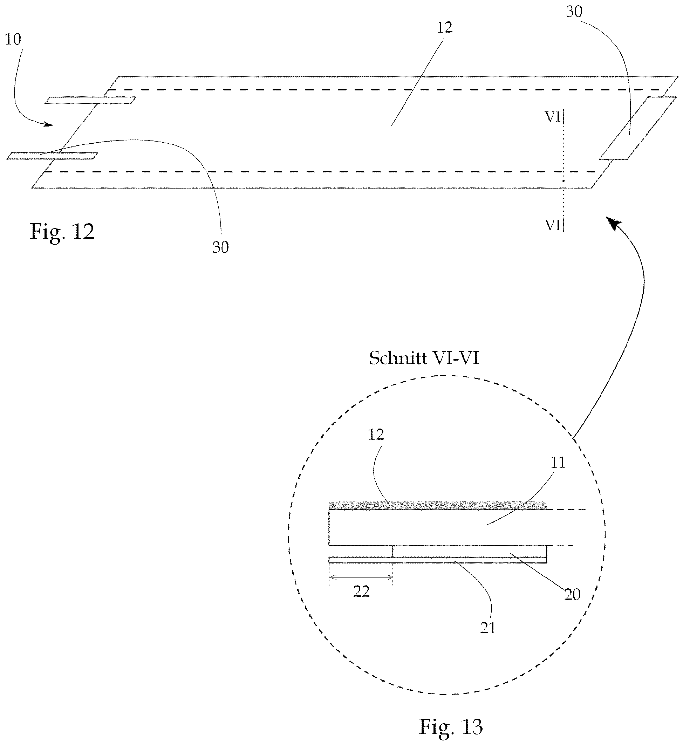

Zum Auslegen des Teppichs **10** wird die kompakte Rolle **13** auf einer gewünschten Stelle des Gebäudebodens platziert und ausgerollt, wobei die Unterseite **11** des Teppichs **10** bodenseitig angeordnet wird, wie in **Fig. 12** und in einer Detailansicht **Fig. 13** von Schnitt VI-VI aus **Fig. 12** illustriert. Anschließend wird ein erstes Ende des Teppichs **10** an dem Gebäudeboden mit Hilfe eines Verlegebandes **30** fixiert und mit Aufbringen einer Zugkraft an dem nicht fixierten zweiten Ende über seine Länge gespannt. Dies kann im einfachsten Fall händisch, durch Erfassen des zweiten Endes des Teppichs **10** und Anziehen erfolgen. Dabei kann der Teppich **10** beispielsweise bis zu einem Prozent seiner ursprünglichen Länge gedehnt werden, wobei das doppelseitige Klebeband **20** und die darauf angeordnete Abdeckfolie **21** ebenfalls um die gleiche Länge gedehnt bzw. gestreckt werden. Aus diesem Grund ist das verwendete Material des Klebebands **20** und der zugehörigen Abdeckfolie **21** in die Länge dehnbar und/oder elastisch ausgebildet.

Danach wird das zweite Ende mit dem Verlegeband **30** fixiert, wie in **Fig. 12** dargestellt. In **Fig. 12** sind das erste und das zweite Ende auf unterschiedliche Arten mit dem Gebäudeboden mit Hilfe des Verlegebandes **30** fixiert, wobei andere Möglichkeiten das Verlegeband **30** anzuordnen denkbar sind.

Nach dem Ergreifen der überstehenden Breite **22** der Abdeckfolie **21** und anschließendes Abziehen der Abdeckfolie **21**, kann ein temporäres Verhaften der Teppichbereiche an dem die doppelseitigen Klebebänder **20** an der Unterseite **11** des Teppichs **10** angeordnet sind durch Anpressen an den Boden erzielt werden.

Für den Abbau des Teppichs **10** wird der Teppich von dem jeweiligen Gebäudeboden abgezogen, wobei die auf dem Gebäudeboden geklebte Seite des doppelseitigen Klebebands **20** im Wesentlichen rückstandsfrei von dem Gebäudeboden abgelöst werden kann, und wobei die auf der Unterseite **11** des Teppichs **10** geklebte Seite des doppelseitigen Klebebands **20** während des Ablösevorgangs des Teppichs **10** von dem Gebäudeboden die Klebewirkung auf die Unterseite **11** des Teppichs **10** beibehält.

Nachfolgend kann das doppelseitige Klebeband **20** von der Unterseite **11** des Teppichs **10** im Wesentlichen rückstandsfrei abgelöst bzw. entfernt werden.

### LISTE DER BEZUGSZEICHEN

- 10...: Teppich
- 11...: Unterseite des Teppichs
- 12...: Oberseite des Teppichs
- 13...: kompakte Teppichrolle
- 20...: doppelseitiges Klebeband
- 21...: Abdeckfolie
- 22...: überstehende Breite der Abdeckfolie
- 30...: Verlegeband
- 100...: Vorrichtung
- 110...: Tragerahmen
- 111...: Verstrebung
- 120...: Schneidführung
- 200...: Zuführabschnitt
- 210...: Halterungselemente
- 300...: Bearbeitungsabschnitt
- 310...: Klebebandrollen
- 320...: Umlenkrollen
- 330...: Klebeband-Zuführelemente
- 340...: Klebeband
- 400...: Auflageplatte
- 400a, 400b, 400c: Module der Auflageplatte
- 500...: Teppich-Führungsrollen
- 510...: Anpressrollen
- 520...: größerer Umfangsabschnitt
- 600...: Sensormittel
- 601...: erster Sensor
- 602...: zweiter Sensor
- 610...: Verschiebeeinheit
- 620...: Abstandshalter
- 700...: Längenmessgerät
- 710...: Längenmessrad
- 720...: Anpressrad
- 721...: Anpressrad zugehöriges Bauteil
- 800...: Aufrollabschnitt
- 810...: Kompaktierungsrollen
- 900...: Motor
- 1000...: Schneidmittel
- 1001...: Ausnehmungen
- 1010...: Schnittlinie
- 2000...: Teppichkante
- X...: Teppichzuführrichtung

## Patentansprüche

1. Vorrichtung (100) zur Herstellung eines temporär auf einem Gebäudeboden festhaftenden Teppichs, bei welchem auf einem Tragerahmen (110) angeordnet sind:
- ein Zuführabschnitt (200) mit Halterungselementen (210) zur Lagerung einer Teppichrolle,
- ein Bearbeitungsabschnitt (300) mit zumindest zwei Klebebandrollen (310), wobei Klebeband von einer Klebebandrolle (310) in ein der jeweiligen Klebebandrolle (310) zugeordneten Klebeband-Zuführelement (330) zugeführt wird,
je zumindest eine im Bereich einer - bezogen auf die Teppichzuführrichtung (X) - vorderen und hinteren Endkante einer Auflageplatte (400) angeordnete Teppich-Führungsrolle (500), welche je eine in der Höhe verstellbare und über der jeweiligen Teppich-Führungsrolle (500) angeordnete Anpressrolle (510) zugeordnet ist,
- ein Aufrollabschnitt (800), mit zumindest zwei Kompaktierungsrollen (810) zum Aufrollen des von dem Bearbeitungsabschnitt (300) einlaufenden Teppichs,
- zumindest ein Motor (900) für den Antrieb von den Teppich bewegenden Rollen sowie weiteren beweglichen Elementen der Vorrichtung (100),
**dadurch gekennzeichnet, dass**
die Klebeband-Zuführelemente (330) derart angeordnet sind, dass die Klebebänder in Form von durchgehenden Streifen im Wesentlichen parallel an den Längskanten auf die Unterseite des Teppichs geklebt werden.

2. Vorrichtung (100) nach Anspruch 1, **dadurch gekennzeichnet, dass** zumindest zwei Sensormittel (600) zum Detektieren des Abstandes zwischen Teppichkante und zugeführtem Klebeband vorgesehen sind und den Sensormitteln (600) eine Verschiebeeinheit (610) zugeordnet ist, die dazu eingerichtet ist, die jeweiligen Klebeband-Zuführelemente (330) und Sensormittel (600) zu verschieben.

3. Vorrichtung (100) nach Anspruch 2, **dadurch gekennzeichnet, dass** die Sensormittel (600) in Richtung Teppichzuführrichtung (X) jeweils vor den Klebeband-Zuführelementen (330) angeordnet sind.

4. Vorrichtung (100) nach einem der Ansprüche 1 bis 3, **dadurch gekennzeichnet, dass** die Auflageplatte (400) zumindest zwei getrennte Module (400a, 400b, 400c) aufweist, wobei zwei Module (400a, 400c) je zumindest ein Klebeband-Zuführelement (330) aufweisen, wobei eines dieser Klebeband-Zuführelement (330) aufweisenden Module (400a, 400c) an dem Tragerahmen (110) fest fixiert angeordnet ist, und das zumindest eine weitere Modul (400a, 400b) auf dem Tragerahmen (110) in Bezug auf das fixierte Modul verschiebbar gelagert und in einer gewünschten Position vorübergehend fixierbar ist.

5. Vorrichtung (100) nach einem der Ansprüche 2 bis 4, **dadurch gekennzeichnet, dass** der Bearbeitungsabschnitt (300) weiters zumindest einen Abstandshalter (620) aufweist, welcher in der Höhe verstellbar ist und welcher den Teppich in gleichbleibenden Abstand zum jeweiligen Sensormittel (600) hält, wobei vorzugsweise der Abstandshalter (620) mit einer der Anpressrollen (510) mechanisch gekoppelt ist und durch ein Absenken dieser Anpressrolle (510) abgesenkt wird.

6. Vorrichtung (100) nach Anspruch 1, **dadurch gekennzeichnet, dass** zumindest zwei Schneidmittel (1000) in jeweils einer Ausnehmung (1001) in der Auflageplatte (400) angeordnet sind, wobei die von den Schneidmitteln (1000) durchgeführten Schnittlinien an dem über die Schneidmittel (1000) geführten Teppich, im Wesentlichen parallel zur Teppichzuführrichtung (X) verlaufen, um eine zugeschnittene Teppichbahn mit gleichbleibender Breite zu erhalten.

7. Vorrichtung (100) nach Anspruch 6, **dadurch gekennzeichnet, dass** mehr als zwei Schneidmittel (1000) in jeweils einer Ausnehmung in der Auflageplatte (400) angeordnet sind, wobei die von den Schneidmitteln (1000) durchgeführten Schnittlinien an dem über die Schneidmittel (1000) geführten Teppich, im Wesentlichen parallel zur Teppichzuführrichtung (X) verlaufen, wobei durch die Schneidmittel (1000) mehrere Teppichbahnen mit gleichbleibender Breite erzeugt werden.

8. Vorrichtung (100) nach einem der Ansprüche 6 oder 7, **dadurch gekennzeichnet, dass** die Klebeband-Zuführelemente (330) derart angeordnet sind, dass die Klebebänder in Form von durchgehenden Streifen im Wesentlichen parallel an den Längskanten auf die Unterseite der durch die Schneidmittel erzeugten Teppichbahnen geklebt werden.

9. Vorrichtung (100) nach einem der Ansprüche 1 bis 8, **dadurch gekennzeichnet, dass** zumindest eine der Teppich-Führungsrollen (500), angetrieben durch den zumindest einen Motor (900), eine Teppichbahn von dem Zuführabschnitt (200) über den Bearbeitungsabschnitt (300) bis zum Aufrollabschnitt (800) führt.

10. Vorrichtung (100) nach einem der Ansprüche 1 bis 9, **dadurch gekennzeichnet, dass** der Bearbeitungsabschnitt (300) zusätzlich ein Längenmessgerät (700) mit einem Längenmessrad (710) umfasst, welches in einer Ausnehmung in der Auflageplatte (400) angeordnet ist, und das Längenmessgerät (700) zusätzlich ein Anpressrad (720) umfasst, welches den über das Längenmessrad (710) laufenden Teppich in ständigen Kontakt mit dem Längenmessrad (710) hält, wobei vorzugsweise das Anpressrad (720) mit einer der Anpressrollen (510) mechanisch gekoppelt ist und durch ein Absenken dieser Anpressrolle (510) abgesenkt wird.

11. Vorrichtung (100) nach einem der Ansprüche 1 bis 10, **dadurch gekennzeichnet, dass** die Teppich-Führungsrollen (500) und/oder die zugeordneten Anpressrollen (510) jeweils in jenem Bereich einen größeren Umfangsabschnitt (520) aufweisen, bei welchem das Klebeband auf den Teppich zugeführt und geklebt wird, wobei vorzugsweise der größere Umfangsabschnitt (520) der Teppich-Führungsrollen (500) und/oder Anpressrollen (510) durch an diesen Rollen bewegliche Elemente erzeugt wird.

12. Vorrichtung (100) nach einem der Ansprüche 1 bis 11, **dadurch gekennzeichnet, dass** nach der in Teppichzuführrichtung (X) letzten Teppich-Führungsrolle (500) eine Schneidführung (120) für ein Schneidewerkzeug vorgesehen ist, um den Teppich in seiner Länge zu beschneiden.

13. Vorrichtung (100) nach einem der Ansprüche 1 bis 12, **dadurch gekennzeichnet, dass** den zumindest zwei Klebebandrollen (310) jeweils eine Umlenkrolle (320) zugeordnet ist, wobei Klebeband von einer Klebebandrolle (310) über die Umlenkrolle (320) in das der jeweiligen Klebebandrolle (310) zugehörige Klebeband-Zuführelement (330) zugeführt wird.

14. Vorrichtung (100) nach einem der Ansprüche 1 bis 13, **dadurch gekennzeichnet, dass** der zumindest eine Motor (900) als Gleichstrommotor ausgebildet ist.

## Claims

1. Device (100) for the production of a carpet temporarily adhering to a floor of a building, which on a support frame (110) are arranged:
- a feeding section (200) with holding elements (210) for supporting a carpet roll,
- a processing section (300) with at least two adhesive tape rolls (310), adhesive tape being fed from an adhesive tape roll (310) into an adhesive tape feed element (330) assigned to the respective adhesive tape roll (310)
in each case at least one carpet guide role (500) arranged in the region of a front and rear end edge, relative to the carpet feed direction (X), of a support plate (400), with which in each case a pressure roller (510) is associated, which is adjustable in height and is arranged above the respective carpet guide role (500),
- a roll-up section (800), with at least two compacting rollers (810) for rolling up the carpet entering from the processing section (300),
- at least one motor (900) for driving rollers moving the carpet, as well as other movable elements of the device (100),
**characterized in that**
the adhesive tape feeding elements (330) are arranged in such a way that the adhesive tapes are glued to the underside of the carpet in the form of continuous strips substantially parallel to the longitudinal edges.

2. Device (100) according to claim 1, **characterized in that** at least two sensor means (600) are provided for detecting the distance between the carpet edge and the adhesive tape fed in, and the sensor means (600) are assigned a displacement unit (610) which is set up to displace the respective adhesive tape feed elements (330) and sensor means (600).

3. Device (100) according to claim 2, **characterized in that** the sensor means (600) are arranged in each case upstream of the adhesive tape feed elements (330) in the direction of carpet feed (X).

4. Device (100) according to any one of claims 1 to 3, **characterized in that** the support plate (400) has at least two separate modules (400a, 400b, 400c), wherein two modules (400a, 400c) each comprise at least one adhesive tape feed element (330), wherein one of these modules (400a, 400c) comprising adhesive tape feed element (330) is arranged fixedly on the support frame (110), and the at least one further module (400a, 400b) is displaceably mounted on the support frame (110) with respect to the fixed module and can be temporarily fixed in a desired position.

5. Device (100) according to any one of claims 2 to 4, **characterized in that** the processing section (300) further comprises at least one spacer (620) which is adjustable in height and which keeps the carpet at a constant distance from the respective sensor means (600), preferably the spacer (620) being connected to one of one of the pressure rollers (510) and is lowered by lowering this pressure roller (510). lowering of this pressure roller (510).

6. Device (100) according to claim 1, **characterized in that** at least two cutting means (1000) are arranged in a respective recess (1001) in the support plate (400), the cutting lines carried out by the cutting means (1000) on the carpet guided over the cutting means (1000) running essentially parallel to the carpet feed direction (X) in order to obtain a cut-to-size carpet web with a constant width.

7. Device (100) according to claim 6, **characterized in that** more than two cutting means (1000) are arranged in a respective recess in the support plate (400), wherein the cutting lines performed by the cutting means (1000) on the carpet passed over the cutting means (1000) run substantially parallel to the carpet feed direction (X), wherein a plurality of carpet webs of constant width are produced by the cutting means (1000).

8. Device (100) according to one of claims 6 or 7, **characterized in that** the adhesive tape feeding elements (330) are arranged in such a way that the adhesive tapes are glued in the form of continuous strips substantially parallel at the longitudinal edges to the underside of the carpet webs produced by the cutting means.

9. Device (100) according to any one of claims 1 to 8, **characterized in that** at least one of the carpet guiding rollers (500), driven by the at least one motor (900), guides a carpet web from the feeding section (200) via the processing section (300) to the winding section (800).

10. Device (100) according to any one of claims 1 to 9, **characterized in that** the processing section (300) additionally comprises a length measuring device (700) with a length measuring wheel (710), which is arranged in a recess in the support plate (400), and the length measuring device (700) additionally comprises a pressing wheel (720), which keeps the carpet running over the length measuring wheel (710) in constant contact with the length measuring wheel (710), wherein preferably the pressure wheel (720) is mechanically coupled to one of the pressure rollers (510) and is lowered by a lowering of this pressure roller (510).

11. Device (100) according to one of the claims 1 to 10, **characterized in that** the carpet guide rollers (500) and/or the associated pressure rollers (510) each have a larger circumferential section (520) **in that** region at which the adhesive tape is preferably the larger circumferential section (520) of the carpet guide rollers (500) and/or pressure rollers (510) is produced by elements movable on these rollers.

12. Device (100) according to one of the claims 1 to 11, **characterized in that** after the last carpet guiding role (500) in carpet feeding direction (X) a cutting guide (120) for a cutting tool is provided to cut the carpet in its length.

13. Device (100) according to any one of claims 1 to 12, **characterized in that** the at least two adhesive tape rolls (310) are each assigned a deflection roll (320), adhesive tape being fed from an adhesive tape roll (310) via the deflection roll (320) into the adhesive tape feed element (330) associated with the respective adhesive tape roll (310).

14. Device (100) according to any one of claims 1 to 13, **characterized in that** the at least one motor (900) is designed as a DC motor.

## Revendications

1. Dispositif (100) pour la fabrication d'un tapis adhérant temporairement à un sol de bâtiment, dans lequel sont disposés sur un cadre de support (110):
- une section d'alimentation (200) avec des éléments de support (210) pour supporter un rouleau de tapis,
- une section de traitement (300) comportant au moins deux rouleaux de bande adhésive (310), la bande adhésive étant amenée d'un rouleau de bande adhésive (310) dans un élément d'alimentation en bande adhésive (330) affecté au rouleau de bande adhésive respectif (310)
au moins une griffe de guidage de tapis (500) disposée dans la zone d'un bord d'extrémité avant et arrière d'une plaque de support (400) par rapport à la direction d'avance du tapis (X), à laquelle est associé un rouleau de pression (510) réglable en hauteur, disposé au-dessus de la griffe de guidage de tapis respective (500)
- une section d'enroulement (800), avec au moins deux rouleaux de compactage (810) pour enrouler le tapis entrant de la section de traitement (300)
- au moins un moteur (900) pour entraîner les rouleaux qui déplacent le tapis, ainsi que d'autres éléments mobiles du dispositif (100)
**caractérisé en ce que**
les éléments d'alimentation en ruban adhésif (330) sont disposés de manière à ce que les rubans adhésifs soient collés sous forme de bandes continues sensiblement parallèles aux bords longitudinaux sur la face inférieure du tapis.

2. Dispositif (100) selon la revendication 1, **caractérisé en ce qu'**au moins deux moyens de détection (600) sont prévus pour détecter la distance entre le bord du tapis et le ruban adhésif introduit, et les moyens de détection (600) sont associés à une unité de déplacement (610) qui est conçue pour déplacer les éléments d'introduction de ruban adhésif (330) et les moyens de détection (600) respectifs.

3. Dispositif (100) selon la revendication 2, **caractérisé en ce que** les moyens de détection (600) sont disposés à chaque fois en amont des éléments d'alimentation en ruban adhésif (330) dans la direction d'alimentation en tapis (X).

4. Dispositif (100) selon l'une quelconque des revendications 1 à 3, **caractérisé en ce que** la plaque de support (400) présente au moins deux modules séparés (400a, 400b, 400c), deux modules (400a, 400c) présentant chacun au moins un élément d'alimentation en ruban adhésif (330), l'un de ces modules (400a, 400c) présentant des éléments d'alimentation en ruban adhésif (330) étant disposé de manière fixe sur le cadre de support (110), et le au moins un autre module (400a, 400b) est monté de manière déplaçable sur le cadre de support (110) par rapport au module fixe et peut être fixé temporairement dans une position souhaitée.

5. Dispositif (100) selon l'une quelconque des revendications 2 à 4, **caractérisé en ce que** la section de traitement (300) comprend en outre au moins une entretoise (620) qui est réglable en hauteur et qui maintient le tapis à une distance constante des moyens de détection respectifs (600), de préférence l'entretoise (620) étant couplée mécaniquement à l'un des rouleaux de pression (510) et étant abaissée par un abaissement de ce rouleau de pression (510).

6. Dispositif (100) selon la revendication 1, **caractérisé en ce qu'**au moins deux moyens de coupe (1000) sont disposés dans un évidement respectif (1001) de la plaque de support (400), les lignes de coupe effectuées par les moyens de coupe (1000) sur le tapis guidé sur les moyens de coupe (1000) s'étendant sensiblement parallèlement à la direction d'avance du tapis (X) afin d'obtenir une bande de tapis coupée à dimension avec une largeur constante.

7. Dispositif (100) selon la revendication 6, **caractérisé en ce que** plus de deux moyens de coupe (1000) sont disposés dans un évidement respectif dans la plaque de support (400), dans lequel les lignes de coupe effectuées par les moyens de coupe (1000) sur le tapis passé sur les moyens de coupe (1000) s'étendent sensiblement parallèlement à la direction d'alimentation en tapis (X), dans lequel une pluralité de bandes de tapis de largeur constante sont produites par les moyens de coupe (1000).

8. Dispositif (100) selon l'une quelconque des revendications 6 ou 7, **caractérisé en ce que** les éléments d'alimentation en ruban adhésif (330) sont disposés de telle sorte que les rubans adhésifs sont collés sous forme de bandes continues sensiblement parallèles aux bords longitudinaux à la face inférieure des bandes de tapis produites par les moyens de découpe.

9. Dispositif (100) selon l'une quelconque des revendications 1 à 8, **caractérisé en ce qu'**au moins l'une desdites griffes de guidage de tapis (500), entraînée par ledit au moins un moteur (900), guide une bande de tapis depuis ladite section d'alimentation (200) via ladite section de traitement (300) vers ladite section d'enroulement (800).

10. Dispositif (100) selon l'une quelconque des revendications 1 à 9, **caractérisé en ce que** la section de traitement (300) comprend en outre un dispositif de mesure de longueur (700) avec une roue de mesure de longueur (710) agencée dans un évidement dans la plaque de support (400), et le dispositif de mesure de longueur (700) comprend en outre une roue de pression (720) qui maintient le tapis passant sur la roue de mesure de longueur (710) en contact constant avec la roue de mesure de longueur (710), de préférence la roue de pression (720) étant couplée mécaniquement à l'un des rouleaux de pression (510) et, au moyen d'un mouvement de pression de la roue de pression (720), pouvant être et est abaissé par un abaissement de ce rouleau de pression (510).

11. Dispositif (100) selon l'une quelconque des revendications 1 à 10, **caractérisé en ce que** les griffes de guidage du tapis (500) et/ou les rouleaux presseurs associés (510) présentent chacun une section périphérique plus grande (520) dans la zone où le ruban adhésif est en train d'être découpé sur le tapis et collé, la plus grande section circonférentielle (520) des griffes de guidage du tapis (500) et/ou des rouleaux de pression (510) étant de préférence produite par des éléments mobiles sur ces rouleaux.

12. Dispositif (100) selon l'une quelconque des revendications 1 à 11, **caractérisé en ce qu'**après la dernière griffe (500) de guidage du tapis dans la direction d'alimentation du tapis (X), un guide de coupe (120) pour un outil de coupe est prévu pour couper le tapis dans sa longueur.

13. Dispositif (100) selon l'une quelconque des revendications 1 à 12, **caractérisé en ce que** les au moins deux rouleaux de ruban adhésif (310) sont chacun associés à un rouleau de déviation (320), le ruban adhésif étant amené d'un rouleau de ruban adhésif (310) via le rouleau de déviation (320) dans l'élément d'alimentation en ruban adhésif (330) associé au rouleau de ruban adhésif (310) respectif.

14. Dispositif (100) selon l'une quelconque des revendications 1 à 13, **caractérisé en ce que** le au moins un moteur (900) est configuré comme un moteur à courant continu.
